# EUROPEAN PATENT APPLICATION

(11) **EP 1 679 593 A2**
(43) Date of publication of application: **12.07.2006**
(21) Application number: 05253373.4
(22) Date of filing: 01.06.2005
(51) Int. Cl.: G06F 9/445, G06F 9/46

(54) **Migration system**

(30) Priority: 07.01.2005 JP 2005002322
(71) Applicant: FUJITSU LIMITED, Kawasaki-shi, Kanagawa 211-8588 (JP)
(72) Inventor: Doi, Tsunehisa c/o Fujitsu Limited, Kawasaki-shi Kanagawa 211-8588 (JP); Ozawa, Toshihiro c/o Fujitsu Limited, Kawasaki-shi Kanagawa 211-8588 (JP)
(74) Representative: Hitching, Peter Matthew

(57) **Abstract**

A migration program which reduces a service suspension time, ensures access transparency and position transparency, and enables normal operation without degrading the performance. When processing is migrated from a source computer (2), an operating reception block (1a) receives an operating system program through a network (6). An execution information reception block (1b) receives execution information needed to resume a process of the source computer, through the network (6) from the source computer (2). An address reception block (1c) receives a floating MAC address assigned to the source computer (2) in addition to the inherent MAC address, from the source computer (2). A processing block (1d) executes processing to restore the state of the source computer (2) in accordance with the received operating system program and execution information, and performs subsequent communication by using the received floating MAC address of the source computer (2).

## Description

### BACKGROUND OF THE INVENTION

### 1. Field of the Invention

The present invention relates to migration programs, information processing apparatuses, computer systems, and computer-readable recording media having stored a migration program, and particularly to a migration program, an information processing apparatus, a computer system, and a computer-readable recording medium having stored a migration program for carrying out communication by using a media access control (MAC) address.

### 2. Description of the Related Art

With recent strides in computer networks such as the Internet and intranets, relative servers have been growing in size. The scale-up of the servers has caused a massive cluster system combining a great number of processor nodes to be configured.

The massive cluster system has a great packing density, that is, a great number of processor nodes are contained in a single physical housing, as seen in a socalled blade server. Some processor nodes share hardware resources.

When maintenance of a processor node is needed in such a cluster system, a running application must be stopped, and the target processor node must be stopped. Alternatively, the application service must be migrated to another processor node, and then the target processor node must be stopped.

If the cluster system has a suspend-and-resume function, an application service can be migrated to a destination processor node by suspending the application service in a storage on the network and then resuming the application service in the destination processor node. The application service can also be migrated to the destination processor node by means of an operating system (OS) incorporating a process migration function to migrate an application process for distributed processing. Further, a system using a virtual machine mechanism may be constructed to migrate the application service by moving a virtual machine implemented by the virtual machine mechanism to the destination processor node.

One computer system can access data without lowering a data access rate after a program is migrated (see Japanese Unexamined Patent Publication No. 2004-246702, for instance).

A temporary stop of an application, however, interrupts a service. The suspend-and-resume function takes time for suspending the application service in the storage on the network and for resuming the service in the destination processor node, increasing the service suspension time.

If just a process is migrated to the destination processor node, access transparency and position transparency from another apparatus must be ensured through the source processor node. It is impractical to continue the service after stopping the processor node.

With a virtual machine structure, a part of hardware should be emulated by software. This turns out to degrade the performance, in comparison with the normal hardware operation.

### SUMMARY OF THE INVENTION

In view of the foregoing, it is an object of the present invention to provide a migration program, an information processing apparatus, a computer system, and a computer-readable recording medium having stored a migration program, which do not interrupt a process service, reduce the service suspension time, ensure access transparency and position transparency from another apparatus, and enable normal operation without degrading the performance.

To accomplish the above object, according to the present invention, there is provided a migration program for operating a computer which carries out communication by using a media access control (MAC) address. This migration program includes the following elements: an operating reception block, an execution information reception block, an address reception block, and a processing block. The operating reception block receives an operating system program through a network. The execution information reception block receives execution information needed to resume a process of a source computer, through the network. The address reception block receives a unique floating MAC address assigned to the source computer in addition to the inherent MAC address, from the source computer. The processing block restores the state of the source computer in accordance with the program received by the operating reception block and the information received by the execution information reception block, and carries out subsequent communication by using the floating MAC address of the source computer received by the address reception block.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 shows an overview of a computer.
FIG. 2 shows the configuration of a sample system including processor nodes.
FIG. 3 shows an OS to be incorporated in a processor node.
FIG. 4 shows a functional block diagram of a management server.
FIG. 5 shows an example data configuration of a MAC address table.
FIG. 6 shows an example data configuration of a MAC address management table.
FIG. 7 shows operations from when a processor node is directed to boot up until boot parameters are received.
FIG. 8 shows operations from when an OS is received until a root file system is mounted.
FIG. 9 shows operations from when a service process starts until the service starts.
FIG. 10 shows operations from when a migrate instruction is sent to a processor node until boot parameters are received.
FIG. 11 shows operations from when an OS is received until the processor node enters the wait state.
FIG. 12 shows operations from when a service migrate instruction is given until a snapshot is transferred.
FIG. 13 shows operations until a service is resumed at a destination.
FIG. 14 is a sequence diagram showing the boot-up operation of a processor node.
FIG. 15 is a sequence diagram showing the migrate operation of a processor node.

### DESCRIPTION OF THE PREFERRED EMBODIMENTS

The principle of the present invention will be described in detail with reference to drawings.

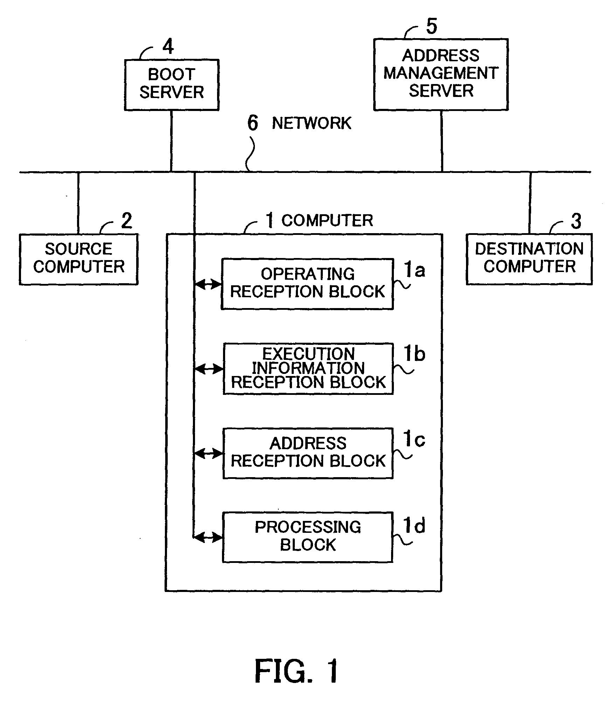

FIG. 1 shows an overview of a computer. A computer 1 is connected via a network 6 to a source computer 2, a destination computer 3, a boot server 4, and an address management server 5. The computer 1 includes an operating reception block 1a, an execution information reception block 1b, an address reception block 1c, and a processing block 1d. The source computer 2 and the destination computer 3 have the same function as the computer 1.

The boot server 4 stores an operating system program. The address management server 5 assigns a unique floating MAC address to the computer 1, the source computer 2, and the destination computer 3 when they start, in addition to their inherent MAC addresses.

If processing is migrated from the source computer 2 to the computer 1, the operating reception block 1a of the computer 1 receives the operating system program, which manages processes, from the boot server 4 through the network 6.

The execution information reception block 1b receives execution information needed to resume the process of the source computer 2, through the network 6 from the source computer 2.

The address reception block 1c receives the floating MAC address assigned to the source computer 2 by the address management server 5, from the source computer 2.

The processing block 1d executes processing to restore the state of the source computer 2 in accordance with the operating system program received by the operating reception block 1a and the execution information received by the execution information reception block 1b, and carries out subsequent communication by using the floating MAC address of the source computer 2 received by the address reception block 1c.

The operation of the computer 1 will next be described. If processing is moved from the source computer 2 to the computer 1, the operating reception block 1a of the computer 1 receives the operating system program from the boot server 4 through the network 6.

The execution information reception block 1b receives the execution information of a process running on the source computer 2, through the network 6. The computer 1 can now execute the process.

The address reception block 1c receives the floating MAC address assigned to the source computer 2, from the source computer 2. Because the computer 1 uses the same floating MAC address as the source computer 2, another computer, not shown, connected to the network 6 can locate and access the process without being aware of the difference between the computer 1 and the source computer 2.

The processing block 1d restores the state of the source computer 2 in accordance with the received operating system program and execution information, and carries out subsequent communication in accordance with the floating MAC address of the source computer 2 received by the address reception block 1c.

The process does not need to be stopped; the execution information is sent and received through the network 6, without being suspended in the storage; the same floating MAC address as used by the source computer 2 is used; and the processing is migrated without the help of a virtual machine mechanism. Accordingly, the process service will not be interrupted; the service suspension time can be reduced; access transparency and position transparency from another apparatus can be ensured; and normal operation can be carried out without degrading the performance.

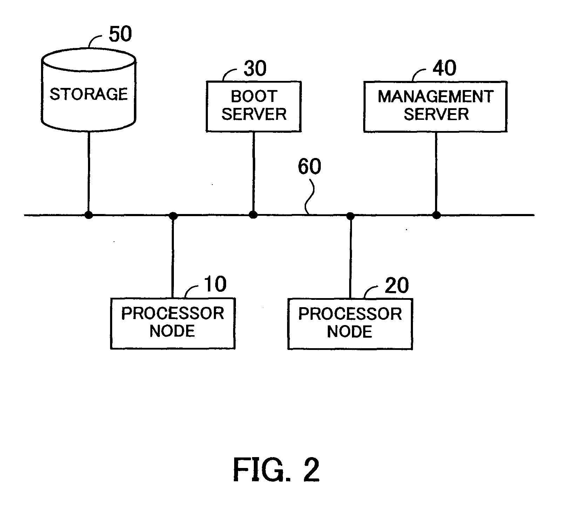

An embodiment of the computer of the present invention used as a processor node of a cluster system will next be described with reference to drawings. FIG. 2 shows the configuration of a sample system including processor nodes. As shown in the figure, a processor node 10, a processor node 20, a boot server 30, a management server 40, and a storage 50 are connected through a network 60 such as a local area network (LAN). The shown system may be configured by a blade server, which contains those apparatuses in a single housing. The boot server 30, the management server 40, and the storage 50 may not be contained in the blade server and may be separately connected to the network 60.

The processor nodes 10 and 20 have an operating system such as Linux (registered trademark) and execute a variety of service processes. The processor nodes 10 and 20 are booted without using a disk and obtain information needed for boot-up from the boot server 30.

The boot server 30 has boot information necessary for booting the processor nodes 10 and 20, a boot loader, and boot parameters. The boot information includes the internet protocol (IP) address of the boot server 30, the IP address at which the processor nodes 10 and 20 should be booted, the file name of the boot loader to be acquired by the processor nodes 10 and 20, and others. The boot parameters include the storage location of the OS to be started. The OS is stored in the boot server 30.

The management server 40 gives a boot-up instruction to the boot server 30 and the processor nodes 10 and 20, under a boot-up instruction from the operator. The management server 40 also boots up a necessary processor node, under a migrate instruction from the operator. The management server 40 directs a source processor node of a service process to be migrated to move execution context information including OS-managed memory management information such as a page table and a floating MAC address, which will be described later in detail, to a newly booted processor node.

The management server 40 assigns a floating MAC address to the processor nodes 10 and 20 in addition to their inherent MAC addresses. With the floating MAC address, any other apparatus can see the processor nodes 10 and 20 in the same way before and after a service is migrated from the processor node 10 or 20 to the other.

The storage 50 stores a file shared by the processor nodes 10 and 20 and the like. The storage 50 uses NFS or Network File System (registered trademark), for instance, to share the file.

The general operation of the system shown in FIG. 2 will next be described. The boot-up operation of the processor node 10 will be described first.

Suppose that neither the processor node 10 nor the processor node 20 is booted. When the operator directs the management server 40 to boot up the processor node 10, the management server 40 directs the boot server 30 to prepare boot information necessary for booting up the processor node 10. At the same time, the management server 40 sends the floating MAC address to be assigned to the processor node 10 to the boot server 30. Then, the management server 40 gives a boot-up instruction to the processor node 10.

The processor node 10 receives the boot-up instruction from the management server 40 and receives the boot information from the boot server 30. In accordance with the boot information, the processor node 10 receives a boot loader from the boot server 30. The processor node 10 starts the boot loader and receives boot parameters including the floating MAC address, from the boot server 30. The processor node 10 next receives an OS from the boot server 30 in accordance with the boot parameters, and starts a service process by means of an application in the storage 50. The processor node 10 uses the inherent MAC address from when the OS is received until the service process starts. In the subsequent operation, the processor node 10 uses the floating MAC address included among the boot parameters. Now, the processor node 10 is booted up.

A migrate operation will next be described. When the operator performs maintenance of the processor node 10, the processor node 20 should be started to migrate the service of the processor node 10 into the processor node 20 so that the service can be continued. So, the operator directs the management server 40 to boot up the processor node 20 and migrate the service of the processor node 10.

The management server 40 directs the boot server 30 to prepare boot information necessary for booting up the processor node 20. The management server 40 also gives a boot-up instruction to the processor node 20.

The processor node 20 receives the boot-up instruction from the management server 40 and the boot information from the boot server 30. In accordance with the boot information, the processor node 20 receives a boot loader from the boot server 30. The processor node 20 starts the boot loader and receives boot parameters from the boot server 30. The boot parameters include an instruction to enter the wait state. The processor node 20 receives an OS from the boot server 30 in accordance with the boot parameters, and enters the migration wait state.

When the processor node 20 enters the wait state, the processor node 10 creates a snapshot of the execution context of the service process running so far, including the floating MAC address and the memory management information managed by the OS, and sends the snapshot through the network 60 to the processor node 20.

Because the execution context including the memory management information and the floating MAC address is sent through the network 60, the processor nodes 10 and 20 can use the same floating MAC address. Processing can be migrated without using a virtual machine mechanism. Accordingly, the process service will not be interrupted; the service suspension time can be reduced; access transparency and position transparency from another apparatus can be ensured; and normal operation can be performed without degrading the performance.

The processor nodes 10 and 20 may incorporate a dynamic reconfiguration mechanism, which allows a service to be migrated between processor nodes having different hardware configurations. Suppose that a source processor node has one CPU and one memory and that a destination processor node has one CPU and two memories. If migration takes place between these processor nodes, the OS views that a memory is added. Then, the dynamic reconfiguration mechanism re-creates the page table managed by the OS so that the OS can recognize and manage the added memory.

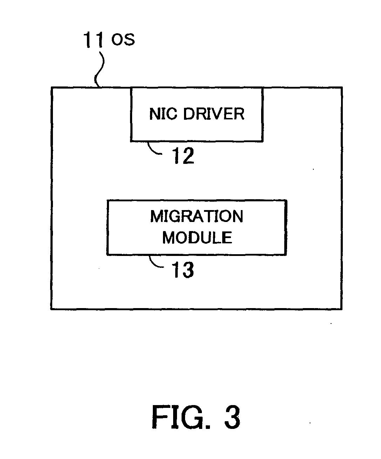

The OS incorporated in the processor nodes 10 and 20 will next be described. FIG. 3 shows that an OS 11 incorporated in a processor node includes a network interface card (NIC) driver 12 and a migration module 13. As has been described above, the OS 11 is Linux, for instance.

The OS 11 executes and manages a service process of an application stored in the storage 50. If the OS 11 starts a plurality of service processes, when the service process to be executed is changed, the OS saves the execution context information of the executed service process to a memory. The OS also manages memory management information such as a page table.

The NIC driver 12 implements a communication function to communicate with another apparatus through the network 60. The NIC driver 12 has an inherent MAC address and can also have a floating MAC address specified by the OS 11. The NIC driver 12 sends and receives packets, using the inherent MAC address or the floating MAC address specified by the OS 11.

The migration module 13 starts a control process to perform migration. When a migrate instruction is given, the control process of the source processor node creates a snapshot of execution context including the floating MAC address and the memory management information managed by the OS 11. The control process connects a socket for transferring data to the destination processor node, and transfers the snapshot. The control process of the destination processor node receives the snapshot sent from the source processor node.

The control process may not collectively send the entire execution context including the memory management information and the floating MAC address to the destination node. The control process may first send the execution context of the service process including the floating MAC address to move execution control of the service, and then send the memory management information successively while continuing the service. Alternatively, the control process may transfer the memory management information successively while continuing the service, then move execution control of the service by transferring the execution context of the service process including the floating MAC address. If the entire execution context is collectively sent, no service process is executed during the transmission. If the context is divided and sent separately, some service processes are halted and some other service processes are continued. Therefore, the service suspension time can be reduced.

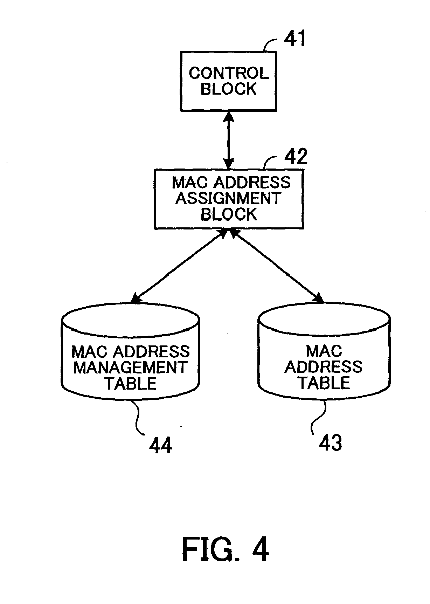

The function of the management server 40 will next be described. FIG. 4 shows a functional block diagram of the management server 40. As shown in the figure, the management server 40 includes a control block 41, a MAC address assignment block 42, a MAC address table 43, and a MAC address management table 44.

When the operator issues an instruction to boot up the processor node 10 or 20, the control block 41 directs the MAC address assignment block 42 to obtain a floating MAC address. The control block 41 sends the floating MAC address obtained by the MAC address assignment block 42 to the boot server 30, together with a node boot-up preparation instruction. The control block 41 also gives a boot-up instruction to the processor node 10 or 20 as instructed by the operator.

When the operator gives an instruction for migration from the processor node 10 or 20, the control block 41 gives a node boot-up preparation instruction to the boot server 30 and directs the destination processor node to boot up. When the control block 41 is informed that the destination processor node enters the wait state (state in which the OS 11 has been loaded), the control block 41 directs the source processor node to create a snapshot of the execution context including the memory management information and the floating MAC address, and send the snapshot to the destination processor node.

When the destination processor node tells that the migration has finished, the control block 41 directs the MAC address assignment block 42 to rewrite the MAC address management table 44, or more precisely, to write that the floating MAC address has moved to the destination processor node.

As controlled by the control block 41, the MAC address assignment block 42 obtains the floating MAC address from the MAC address table 43 and rewrites the contents of the MAC address management table 44 accordingly.

The MAC address table 43 stores a plurality of unique floating MAC addresses that can be assigned to the processor node to be booted up. Unique floating MAC addresses are given to processor node system vendors in advance so that each processor node system supplied by the vendors will have a unique floating MAC address. The MAC address management table 44 keeps which floating MAC address stored in the MAC address table 43 is assigned to which processor node.

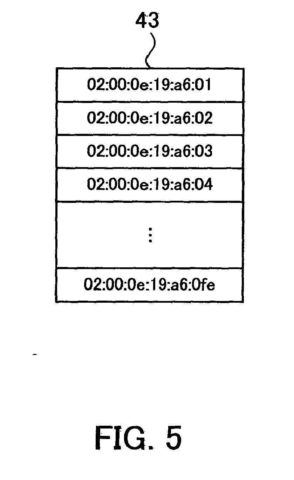

FIG. 5 shows an example data configuration of the MAC address table 43, or how floating MAC addresses are stored in the MAC address table 43.

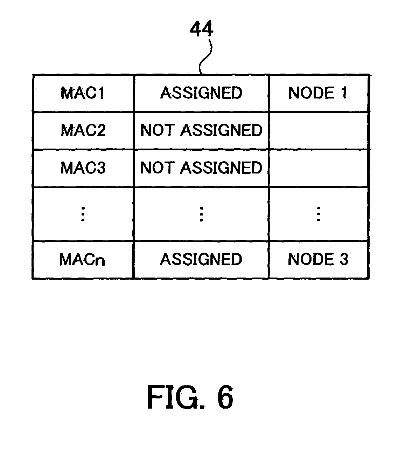

FIG. 6 shows an example data configuration of the MAC address management table 44. The MAC address management table 44 has a column of a name assigned to each floating MAC address in the MAC address table 43, a column of information indicating whether the floating MAC address is assigned to a processor node, and a column of a name of an active processor node. Although FIG. 2 shows just the processor nodes 10 and 20, it is supposed that more processor nodes are connected to the network 60.

Suppose that the processor nodes 10 and 20 are named as node 1 and node 2. Suppose also that MAC1, MAC2, ... MACn are names of floating MAC addresses kept in the MAC address table 43 shown in FIG. 5. Then, the tables indicate that the processor node 10 is assigned a MAC address 02:00:0e:19:a6:01.

When the service of the processor node 10 is migrated into the processor node 20, the floating MAC address assigned to the processor node 10 is moved to the processor node 20. Then, the MAC address assignment block 42 rewrites the top row of the MAC address management table 44 from node 1 to node 2.

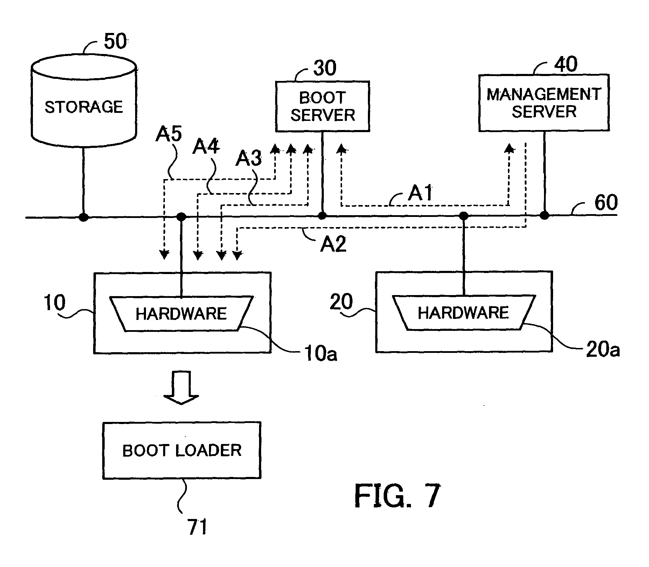

The boot-up operation of the processor node will next be described with reference to a system configuration. FIG. 7 shows operations from when a processor node is directed to boot up until the boot parameters are received. Like elements are denoted by the same reference numerals as in FIG. 2, and descriptions of those elements will be omitted.

FIG. 7 shows that the processor node 10 and the processor node 20 have hardware 10a and hardware 20a respectively. The hardware 10a and 20a includes a CPU, a RAM, and a communication interface for communicating with another apparatus through the network 60, for instance, and implements a boot loader, which will be described later, an OS, a service process, and other functions.

Suppose that the processor nodes 10 and 20 have not yet been booted up. When the operator directs the management server 40 to boot up the processor node 10, the management server 40 directs the boot server 30 to prepare boot information including the IP address at which the processor node 10 should be started and the file name of the boot loader to be loaded, that is, to set up a dynamic host configuration protocol (DHCP). This step is represented by a dotted arrow line A1 in the figure. In this step, the management server 40 also obtains the floating MAC address to be assigned to the processor node 10 from the MAC address table 43, and sends the floating MAC address to the boot server 30. When the boot information becomes ready, the boot server 30 informs the management server 40 of the fact.

Next, the management server 40 gives a boot-up (power-on) instruction to the processor node 10, which is represented by a dotted arrow line A2 in the figure. The processor node 10 executes a power-on self test (POST), under the boot-up instruction from the management server 40.

The processor node 10 broadcasts a boot information request (DHCP request). In the step represented by a dotted arrow line A3, the boot server 30 receives the boot information request and sends the boot information prepared under the instruction in the step represented by the dotted arrow line A1, to the processor node 10.

The processor node 10 references the boot file name included in the received boot information and receives a boot loader from the boot server 30, in a step represented by a dotted arrow line A4 in the figure, and starts the boot loader. Now, the hardware 10a of the processor node 10 implements the functions of a boot loader 71. The processor node 10 has an Intel architecture (IA) 32, and obtains the boot information by means of a mechanism referenced as preboot execution environment (PXE), for instance.

In accordance with the boot loader 71, the processor node 10 seeks and obtains boot parameters including the storage location of the OS to be loaded, from the boot server 30, in a step represented by a dotted arrow line A5 in the figure. The boot parameters include the floating MAC address sent from the management server 40 to the boot server 30 in the step represented by the dotted arrow line A1.

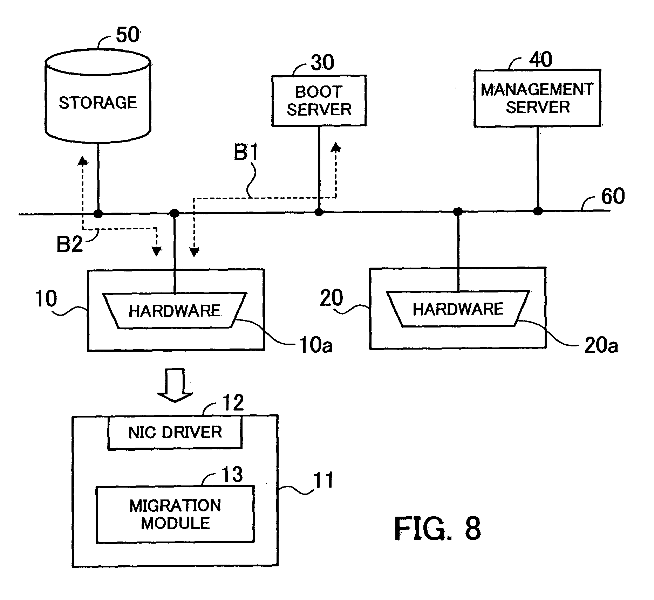

FIG. 8 shows operations from when the OS is received until a root file system is mounted. Like elements are denoted by the same reference numerals as in FIG. 7, and descriptions of those elements will be omitted.

In accordance with the received boot parameters, the processor node 10 seeks and obtains an OS from the boot server 30, in a step represented by a dotted arrow line B1 shown in the figure, and starts the OS. Now, the hardware 10a of the processor node 10 incorporates the OS 11, which includes the NIC driver 12 and the migration module 13.

After the OS 11 starts, the processor node 10 specifies the floating MAC address included in the boot parameters, in the NIC driver 12. In subsequent communication with another apparatus, the processor node 10 uses the floating MAC address.

Then, in a step represented by a dotted arrow line B2 shown in the figure, the processor node 10 requests the storage 50 to mount a root file system. The root file system of the storage 50 is mounted accordingly.

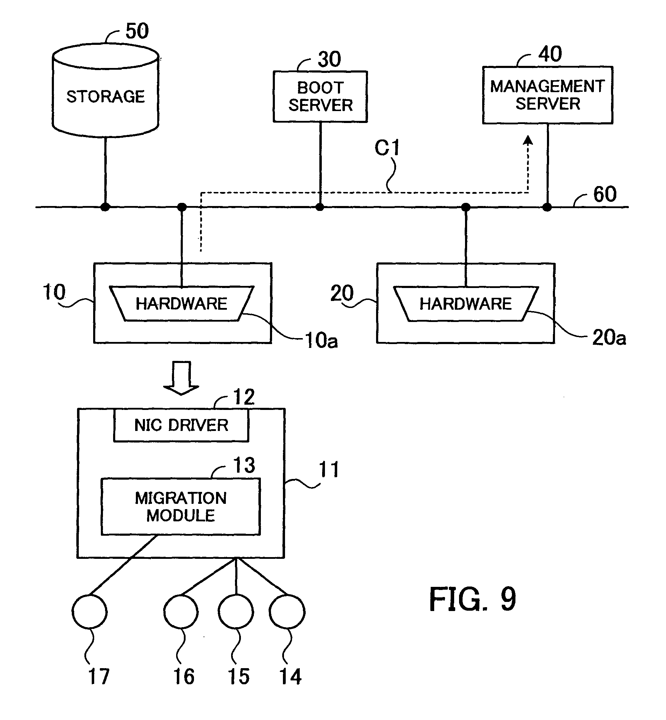

FIG. 9 shows operations from when a service process starts until the service starts. Like elements are denoted by the same reference numerals as in FIG. 8, and descriptions of those elements will be omitted.

After the root file system of the storage 50 is mounted, the processor node 10 starts service processes 14, 15, and 16. Then, the migration module 13 starts a control process 17 to perform migration.

When the control process 17 starts, the processor node 10 sends a boot-up notification to the management server 40 in accordance with the control process 17, in a step represented by a dotted arrow line C1 shown in the figure. The management server 40 then writes in the MAC address management table 44 that the floating MAC address has been assigned to the processor node 10. Now, the processor node 10 is booted up.

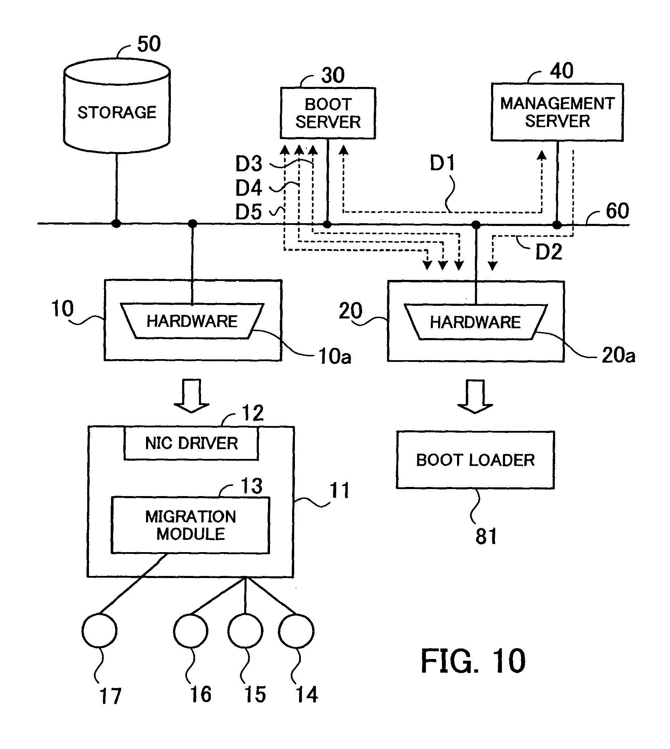

The migrate operation of a processor node will next be described with reference to a system configuration. FIG. 10 shows operations from when a migrate instruction is sent to a processor node until boot parameters are received. Like elements are denoted by the same reference numerals as in FIG. 9, and descriptions of those elements will be omitted.

As shown in FIG. 10, the processor node 10 incorporates the OS 11, and the service processes 14, 15, and 16 and the control process 17 are running. Suppose that the operator performs maintenance of the processor node 10 and migrates the services of the service processes 14, 15, and 16 running on the processor node 10 into the processor node 20, which has not yet been booted up.

First, the operator directs the management server 40 to boot up the processor node 20. The management server 40 directs the boot server 30 to prepare boot information including the IP address at which the processor node 20 should start and the file name of the boot loader to be loaded. This step is represented by a dotted arrow line D1 in the figure. When the boot information becomes ready, the boot server 30 informs the management server 40 of the fact.

The management server 40 then gives a boot-up (power-on) instruction to the processor node 20, in a step represented by a dotted arrow line D2 in the figure. The processor node 20 executes a POST, under the boot-up (power-on) instruction from the management server 40.

The processor node 20 broadcasts a boot information request (DHCP request). The boot server 30 receives the boot information request in a step represented by a dotted arrow line D3 in the figure. The boot server 30 sends the boot information prepared under the instruction in the step represented by the dotted arrow line D1, to the processor node 20.

The processor node 20 references a boot file name included in the received boot information and receives the boot loader from the boot server 30, in a step represented by a dotted arrow line D4 in the figure, and starts the boot loader. Now, the hardware 20a of the processor node 20 implements the functions of a boot loader 81.

In accordance with the boot loader 81, the processor node 20 seeks and obtains boot parameters including the storage location of the OS to be loaded, from the boot server 30. This step is represented by a dotted arrow line D5 in the figure.

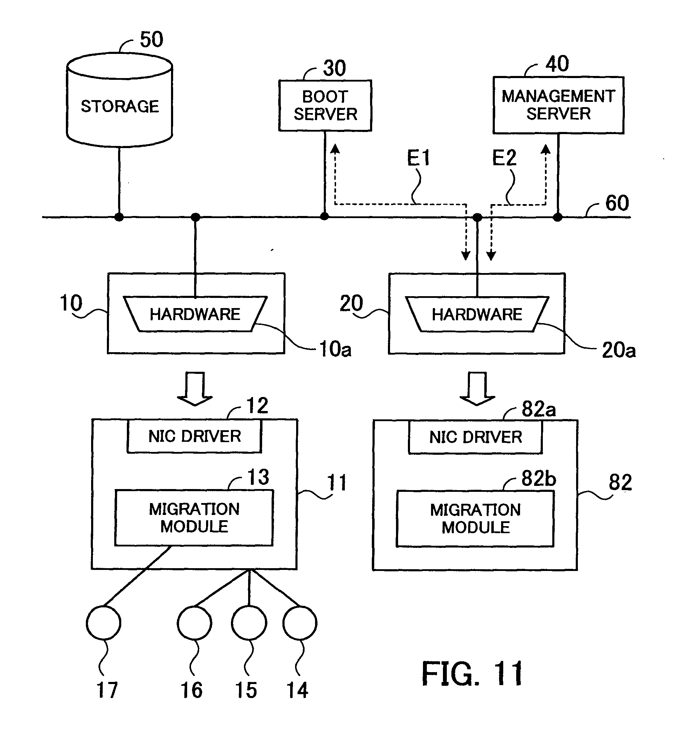

FIG. 11 shows operations from when the processor node 20 receives an OS until the processor node 20 enters the wait state. Like elements are denoted by the same reference numerals as in FIG. 10, and descriptions of those elements will be omitted.

In accordance with the received boot parameters, the processor node 20 seeks and receives an OS from the boot server 30, in a step represented by a dotted arrow line E1 in the figure, and starts the OS. The hardware 20a of the processor node 20 now incorporates the OS 82, which includes a NIC driver 82a and a migration module 82b.

The processor node 20 enters the wait state in accordance with the OS 82 and boot parameters, and sends a notification of wait completion to the management server 40. This step is represented by a dotted arrow line E2 in the figure. With the notification of wait completion from the processor node 20, the management server 40 can recognize that the processor node 20 has received the OS 82 and is ready to receive a service from the processor node 10.

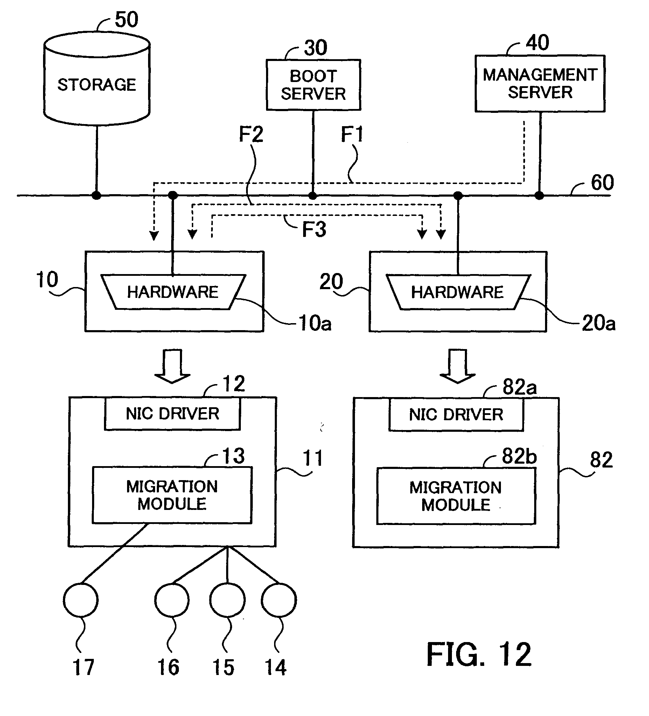

FIG. 12 shows operations from when a service migrate instruction is given until a snapshot is transferred. Like elements are denoted by the same reference numerals as in FIG. 11, and descriptions of those elements will be omitted.

After the notification of wait completion is received from the processor node 20, the management server 40 outputs a migrate instruction to the processor node 10. This step is represented by a dotted arrow line F1 in the figure. The control process 17 of the processor node 10 operates under the migrate instruction from the management server 40, and creates a snapshot of the execution context of the service processes 14, 15, and 16, including the memory management information managed by the OS 11 and the floating MAC address assigned to the processor node 10.

The control process 17 of the processor node 10 connects a socket for data transfer to the processor node 20, in a step represented by a dotted arrow line F2 in the figure. Then, the control process 17 of the processor node 10 sends the created snapshot to the processor node 20, in a step represented by a dotted arrow line F3 in the figure. As described with reference to FIG. 3, the execution context including the memory management information and the floating MAC address may be divided and sent separately.

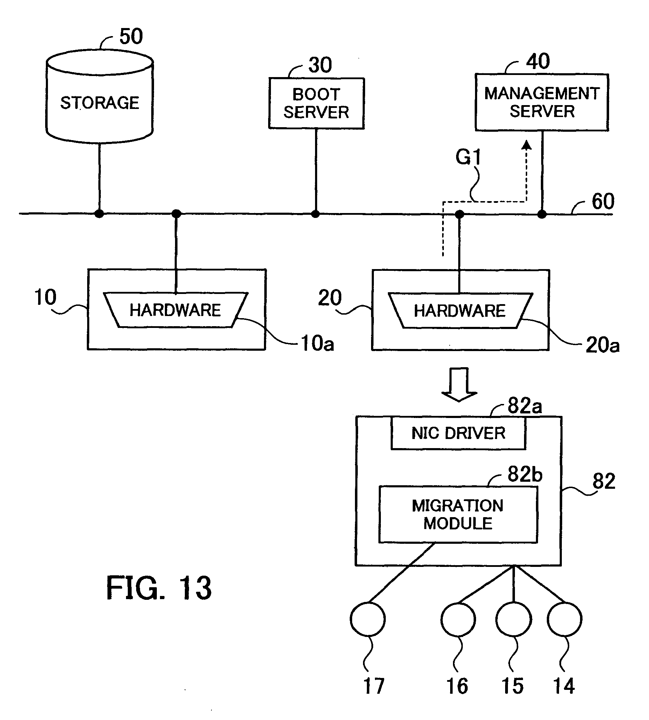

FIG. 13 shows operations until a service is resumed at a destination node. The migration module 82b starts the control process 17 to perform migration. The control process 17 receives the snapshot sent from the processor node 10. The processor node 20 receives the snapshot, switches to the execution context of the snapshot, resumes the service processes 14, 15, and 16, and specifies the floating MAC address included in the snapshot in the NIC driver 82a.

The processor node 20 then informs the management server 40 that migration has finished, in a step represented by a dotted arrow line G1 in the figure. The management server 40 rewrites the MAC address management table 44 to indicate that the floating MAC address has moved from the processor node 10 to the processor node 20. The processor node 10 from which the snapshot has been sent stops and can now undergo maintenance. The migration has been performed in this way.

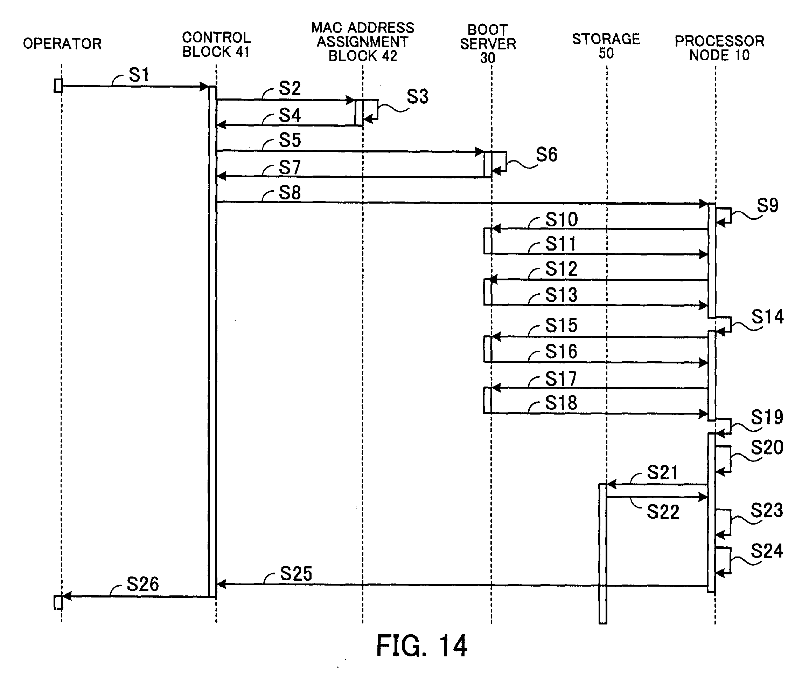

The boot-up operation of the processor node 10 shown in FIG. 2 will be described below with reference to a sequence diagram shown in FIG. 14. The operation to boot up the processor node 10 is made in the following steps.

Step S1: The operator directs the management server 40 to boot the processor node 10.

Step S2: The control block 41 of the management server 40 sends a request to assign a MAC address to the MAC address assignment block 42 in response to the operator's operation.

Step S3: The MAC address assignment block 42 of the management server 40 references the MAC address table 43 in response to the MAC-address-assignment request, and obtains the floating MAC address to be assigned to the processor node 10.

Step S4: The MAC address assignment block 42 of the management server 40 passes the obtained floating MAC address to the control block 41.

Step S5: The control block 41 of the management server 40 sends a node boot-up preparation instruction and the floating MAC address obtained in the step S4 to the boot server 30.

Step S6: The boot server 30 makes preparations for booting up the processor node 10 in response to the node boot-up preparation instruction sent from the management server 40. To be more specific, the boot server 30 sets up the DHCP.

Step S7: When the DHCP has been set up, the boot server 30 sends a notification of node preparation completion to the control block 41 of the management server 40.

Step S8: The control block 41 of the management server 40 receives the notification of node preparation completion and sends a node boot-up instruction to the processor node 10. To be more specific, the control block 41 of the management server 40 sends an instruction to turn on the processor node 10.

Step S9: The processor node 10 receives the node boot-up instruction from the management server 40 and conducts a POST.

Step S10: After the POST finishes, the processor node 10 broadcasts a boot information request (DHCP request). The boot server 30 receives the boot information request.

Step S11: The boot server 30 sends the boot information (DHCP) to the processor node 10 in response to the boot information request sent from the program node 10.

Step S12: The processor node 10 references a boot file name included in the boot information and makes a boot loader request to the boot server 30.

Step S13: The boot server 30 sends the requested boot loader to the processor node 10.

Step S14: The processor node 10 starts the boot loader received from the boot server 30.

Step S15: The processor node 10 sends a boot parameter request to the boot server 30, in accordance with the started boot loader.

Step S16: The boot server 30 sends the requested boot parameters to the processor node 10. The boot parameters include the floating MAC address sent to the boot server 30 in the step S5.

Step S17: The processor node 10 sends an OS request to the boot server 30, in accordance with the received boot parameters.

Step S18: The boot server 30 sends the requested OS to the processor node 10.

Step S19: The processor node 10 starts the OS received from the boot server 30.

Step S20: The processor node 10 sets up the floating MAC address included in the boot parameters received in the step S16. The processor node 10 uses the floating MAC address for subsequent communication with another apparatus connected to the network 60.

Step S21: The processor node 10 requests the storage 50 to mount a root file system.

Step S22: The storage 50 informs the processor node 10 that the file system has been mounted. Now, the processor node 10 can access the storage 50.

Step S23: The processor node 10 starts a service process of an application in the storage 50.

Step S24: The processor node 10 starts a control process by means of the migration module included in the OS.

Step S25: The processor node 10 sends a boot-up notification to the control block 41 of the management server 40 and starts the service of the service process.

Step S26: The control block 41 of the management server 40 informs the operator that the boot-up operation of the processor node 10 has finished. The processor node 10 has been booted in this way.

A trivial file transfer protocol (TFTP) is used to send the boot loader request in the step S12 and the boot loader in the step S13, for instance. The TFTP may also be used to send the boot parameter request in the step S15 and the boot parameters in the step S16. The TFTP may further be used to send the OS request in the step S17 and the OS in the step S18.

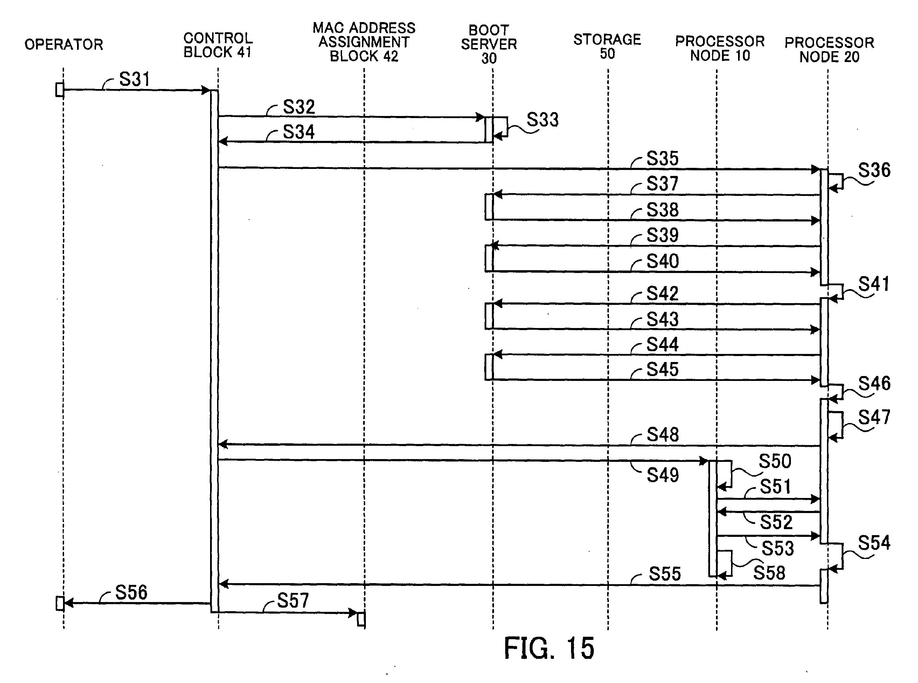

The migration from the processor node 10 to the processor node 20 shown in FIG. 2 will be described below with reference to a sequence diagram shown in FIG. 15. The operation to boot up the processor node 20 and migrate a service from the processor node 10 to the processor node 20 is made in the following steps.

Step S31: The operator directs the management server 40 to migrate a service from the processor node 10 to the processor node 20.

Step S32: The control block 41 of the management server 40 sends a node boot-up preparation instruction to the boot server 30 in response to the operator's operation.

Step S33: The boot server 30 makes preparations for booting up the processor node 20 in response to the node boot-up preparation instruction sent from the management server 40. To be more specific, the boot server 30 sets up the DHCP.

Step S34: When the DHCP has been set up, the boot server 30 sends a notification of node preparation completion to the control block 41 of the management server 40.

Step S35: The control block 41 of the management server 40 receives the notification of node preparation completion from the boot server 30 and sends a node boot-up instruction to the processor node 20. To be more specific, the control block 41 of the management server 40 sends an instruction to turn on the processor node 20.

Step S36: The processor node 20 receives the node boot-up instruction from the management server 40 and executes a POST.

Step S37: The processor node 20 finishes the POST and broadcasts a boot information request (DHCP request). The boot server 30 receives the boot information request.

Step S38: The boot server 30 sends boot information (DHCP) to the processor node 20 in response to the boot information request sent from the processor node 20.

Step S39: The processor node 20 references a boot file name included in the boot information and makes a boot loader request to the boot server 30.

Step S40: The boot server 30 sends the requested boot loader to the processor node 20.

Step S41: The processor node 20 starts the boot loader received from the boot server 30.

Step S42: The processor node 20 sends a boot parameter request to the boot server 30, in accordance with the started boot loader.

Step S43: The boot server 30 sends the requested boot parameters to the processor node 20.

Step S44: The processor node 20 sends an OS request to the boot server 30, in accordance with the received boot parameters.

Step S45: The boot server 30 sends the requested OS to the processor node 20.

Step S46: The processor node 20 starts the OS received from the boot server 30.

Step S47: The processor node 20 enters the wait state.

Step S48: The processor node 20 sends a notification of wait completion to the management server 40.

Step S49: The control block 41 of the management server 40 recognizes that the destination processor node 20 has entered the wait state, and gives a service migrate instruction to the processor node 10.

Step S50: The processor node 10 creates a snapshot of execution context including the floating MAC address and the memory management information managed by the OS.

Step S51: The processor node 10 connects a socket to send the created snapshot to the processor node 20.

Step S52: The processor node 20 informs the processor node 10 that the socket has been connected.

Step S53: The processor node 10 sends the created snapshot to the processor node 20. The execution context including the memory management information and the floating MAC address may be divided and sent separately, as has been described with reference to FIG. 3.

Step S54: The processor node 20 switches to the execution context included in the snapshot sent from the processor node 10 and resumes the service. The processor node 20 also switches from the inherent MAC address to the floating MAC address.

Step S55: The processor node 20 informs the management server 40 that the migration has finished.

Step S56: The control block 41 of the management server 40 informs the operator that the boot-up operation of the processor node 20 has finished.

Step S57: The control block 41 of the management server 40 controls the MAC address assignment block 42 and rewrites the MAC address management table 44 to indicate that the floating MAC address has been moved from the processor node 10 to the processor node 20.

Step S58: After the snapshot transfer finishes, the processor node 10 stops its operation so that the operator can perform maintenance.

The execution context including the memory management information and the floating MAC address is sent to the destination processor node 20 through the network 60, so that the processor node 10 and the processor node 20 can use the same floating MAC address. The service can be migrated without using a virtual machine mechanism. Accordingly, the process service will not be interrupted; the service suspension time can be reduced; access transparency and position transparency from another apparatus can be ensured; and the normal operation can be performed without degrading the performance.

The operator can migrate a service of a processor node to another processor node having resources required by the service process, for any purpose other than maintenance. Therefore, the resource distribution can be optimized.

A destination processor node can be selected so that the power, temperature, and other environmental conditions of the blade server containing the processor node can be optimized. Therefore, an optimum operating environment for the processor node can be obtained.

A program describing a function which should be provided by a computer is supplied. When the program runs on the computer, the function is implemented on the computer. The program describing the processing can be recorded on a computer-readable recording medium such as a magnetic recording apparatus, an optical disc, a magneto-optical recording medium, and a semiconductor memory. The magnetic recording apparatus may be a hard disk drive (HDD), a flexible disk (FD), or a magnetic tape, for instance. The optical disc may be a digital versatile disc (DVD), a DVD random access memory (DVD-RAM), a compact disc read only memory (CD-ROM), a CD recordable (CD-R), and a CD rewritable (CD-RW), for instance. The magneto-optical recording medium may be a magneto-optical disc (MO), for instance.

The computer stores a program recorded on a transportable recording medium or a program transferred from a server computer, in its storage apparatus. The computer reads the program from its storage apparatus and executes the processing in accordance with the program. The computer can also read the program directly from the transportable recording medium and execute the processing in accordance with the program. The computer can also execute the processing successively in accordance with a program each time the program is transferred from a server computer.

The migration program according to the present invention eliminates the need for stopping a process and suspending the execution information in a storage. The execution information can be sent and received just through a network, and the source and destination computers can use the same floating MAC address. Processing can be migrated without the help of a virtual machine mechanism. Therefore, the process service will not be interrupted; the service suspension time can be reduced; access transparency and position transparency from another apparatus can be ensured; and normal operation can be performed without degrading the performance.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

Another embodiment of the present invention comprises a migration program which when run on a computer is operable to cause the computer to carry out communication by using a MAC address, the program comprising: an operating reception program portion for receiving an operating system program through a network; an execution information reception program portion for receiving execution information needed to resume a process of a source computer, through the network from the source computer; an address reception program portion for receiving a unique floating MAC address assigned to the source computer in addition to the inherent MAC address, from the source computer; and a processing program portion for causing processing to be executed to restore the state of the source computer in accordance with the information received by the execution reception program portion and the program received by the operating reception program portion, and for causing subsequent communication to be carried out by using the floating MAC address of the source computer received by the address reception means.

## Claims

1. A migration program for operating a computer which carries out communication by using a MAC address as:
an operating reception means for receiving an operating system program through a network;
an execution information reception means for receiving execution information needed to resume a process of a source computer, through the network from the source computer;
an address reception means for receiving a unique floating MAC address assigned to the source computer in addition to the inherent MAC address, from the source computer; and
a processing means for executing processing to restore the state of the source computer in accordance with the information received by the execution information reception means and the program received by the operating reception means, and carrying out subsequent communication by using the floating MAC address of the source computer received by the address reception means.

2. The migration program according to Claim 1, wherein the execution information reception means and the address reception means are included in the operating system program.

3. The migration program according to Claim 1, wherein the execution information includes execution context of the process and memory management information managed by the operating system program.

4. An information processing apparatus for carrying out communication by using a MAC address, the information processing apparatus comprising:
an operating reception means for receiving an operating system program through a network;
an execution information reception means for receiving execution information needed to resume a process of a source computer, through the network from the source computer;
an address reception means for receiving a unique floating MAC address assigned to the source computer in addition to the inherent MAC address, from the source computer; and
a processing means for executing processing to restore the state of the source computer in accordance with the information received by the execution information reception means and the program received by the operating reception means, and carrying out subsequent communication by using the floating MAC address of the source computer received by the address reception means.

5. The information processing apparatus according to Claim 4, wherein the execution information reception means and the address reception means are included in the operating system program.

6. The information processing apparatus according to Claim 4, wherein the execution information includes execution context of the process and memory management information managed by the operating system program.

7. A computer system for migrating processing from a source computer to a destination computer, the computer system comprising:
an operating reception means for receiving an operating system program for managing a process, through a network, when the processing is migrated from the source computer;
an execution information reception means for receiving execution information needed to resume the process of the source computer, through the network from the source computer;
an address reception means for receiving a unique floating MAC address assigned to the source computer in addition to the inherent MAC address, from the source computer;
an execution information transmission means for sending the execution information of the process, through the network to the destination computer, when the processing is migrated to the destination computer; and
an address transmission means for sending the unique floating MAC address assigned to the source computer, to the destination computer.

8. The computer system according to Claim 7, wherein the execution information transmission means first sends execution context included in the execution information and then successively sends memory management information which is included in the execution information and managed by the operating system program.

9. The computer system according to Claim 7, wherein the execution information transmission means sends memory management information which is included in the execution information and managed by the operating system program successively and then sends execution context included in the execution information.

10. The computer system according to Claim 7, further comprising an operation stop means for stopping operation when the transmission of the execution information finishes.

11. A computer-readable recording medium having recorded a migration program for operating a computer which carries out communication by using a MAC address as:
an operating reception means for receiving an operating system program through a network;
an execution information reception means for receiving execution information needed to resume a process of a source computer, through the network from the source computer;
an address reception means for receiving a unique floating MAC address assigned to the source computer in addition to the inherent MAC address, from the source computer; and
a processing means for executing processing to restore the state of the source computer by means of the information received by the execution information reception means and the program received by the operating reception means, and carrying out subsequent communication by using the floating MAC address of the source computer received by the address reception means.
